# EUROPEAN PATENT APPLICATION

(11) **EP 4 299 237 A1**
(43) Date of publication of application: **03.01.2024**
(21) Application number: 23178882.9
(22) Date of filing: 13.06.2023
(51) Int. Cl.: B23K 35/02, B23K 1/00, B23K 35/30, B23P 6/00, C23C 24/04, F01D 5/00

(54) **METHOD AND SYSTEM FOR THERMAL SPRAYING BRAZE ALLOY MATERIALS ONTO A NICKEL-BASED COMPONENT TO FACILITATE HIGH DENSITY BRAZED JOINT WITH LOW DISCONTINUITIES**

(30) Priority: 01.07.2022 US 202217856233
(71) Applicant: General Electric Technology GmbH, 5400 Baden (CH)
(72) Inventor: HENDERSON, Brian Leslie, Schenectady, 12345 (US); DULIN, Bruce Edward, Schenectady, 12345 (US)
(74) Representative: Openshaw & Co.

(57) **Abstract**

A method and system (46) for thermal spraying braze alloy materials onto a nickel-based component (48) to facilitate a high density brazed joint with low discontinuities is disclosed. The method and system (46) utilize a high melt braze alloy material and a low melt braze alloy material. A thermal spraying application sprays the high melt braze alloy material and the low melt braze alloy onto a surface (58) of a nickel-based component (48) containing a damaged portion (14). The sprayed high melt braze alloy material and the low melt braze alloy form a solidified deposit (56) within the damaged portion (14) of the nickel-based component (48). The solidified deposit (56) is a homogeneous braze coating containing the high melt braze alloy and the low melt braze alloy. The homogeneous braze coating facilitates a high density brazed joint with low discontinuities in the damaged portion (14) of the nickel-based component (48).

## Description

### BACKGROUND

### TECHNICAL FIELD

Embodiments of this disclosure relate generally to brazing, and more specifically, to a method and a system for thermal spraying braze alloy materials onto a nickel-based component to facilitate a high density brazed joint with low discontinuities.

### DISCUSSION OF ART

One area in which brazing is used is in the repair of nickel-based components such as those built from nickel-based superalloys. Turbine parts are examples of components that can be built from nickel-based superalloys. Nickel-based superalloys are suitable for use as turbine components because of their ability to withstand loading at operating temperatures close to their melting point, their resistance to mechanical degradation, and their resistance to environmental corrosion. Nonetheless, over time these turbine components made from nickel-based superalloys may wear or corrode due to the environment within which they operate. As such, these nickel-based superalloy turbine components must be either replaced or repaired.

Repairing nickel-based superalloy turbine components typically involves making repairs by brazing. Braze repairs of nickel-based superalloy turbine components is preferable over other repair methods such as welding for a variety of reasons. For example, brazing does not generally promote cracks like with welding. In addition, brazing typically can prevent oxidation. Also, brazing can allow for joining of dissimilar materials (e.g., metal to ceramic). Another benefit associated with brazing is that braze alloys can have better corrosion resistance and high temperature creep resistance due to the tailored compositions of braze alloys.

Although brazing is the preferred approach for repairing nickel-based superalloy turbine components, there are challenges in obtaining high density brazed joints with low discontinuities. For example, one brazing approach that is used to repair nickel-based superalloy turbine components such as turbine blades and vanes involves the use of a paste slurry containing braze alloys. Typically, with a braze repair of a turbine blade and a vane, the paste slurry is put into an opening or a gap that has been hollowed out from the base material of the turbine component to remove a damaged portion having a defect such as for example a crack.

After the paste slurry is placed in the gap, the blade or vane is put into a furnace where the turbine component is heated to create a solid connection between the base material of the component and the paste slurry containing the brazing alloys. In particular, the heat provided by the furnace causes liquid from the paste slurry to be removed by diffusion. The particles of the braze alloys are then heated and sintered together to form the solid connection between the braze alloys and the base material of the turbine component. A problem with this approach is that the brazed joint is oftentimes occupied with voids or porosity due to the low density of the braze alloys in the joint. The voids in the brazed joint result in the joint having decreased joint strength because the strength across the joint is not same due to the voids.

Another problem with using a paste slurry to repair a turbine blade or vane is that it can be difficult to insert the slurry in the hollowed out gap, as well as keep it in place in the gap during brazing due to the geometry and positioning of the turbine component. This often leads to an over application of the slurry paste in the gap to account for the likelihood that the paste will not stay in place in the gap. Consequently, the slurry paste may travel to other parts of the turbine component, which can lead to corrosion of these parts.

In another brazing approach that entails the repair of nickel-based superalloy turbine components such as turbine blades and vanes, a high flow braze alloy and a low flow braze alloy are used to produce the brazed joint. In this approach, the low flow braze alloy is typically applied first to the gap and then the high flow braze alloy is slathered on top of the low flow braze alloy. During the heating and sintering of the braze alloys, the high flow braze alloy will diffuse into the low flow braze alloy (i.e., between the interstitial spaces of the low flow braze alloy). Like the brazing approach that relies on a slurry paste, the diffusion of the high flow braze alloy into the low flow braze alloy often results in low density brazed joints due to voids in the joints. For this reason, the brazed joint resulting from the brazing of the high flow braze alloy and the low flow braze alloy will be of diminished strength due to the uneven joint strength across the joint. Notwithstanding the possibility of having low density brazed joints, this brazing approach has its limits in implementation with a turbine part such as a turbine blade and vane as it can be a slow process, and is a process that is complicated to industrialize in a manner that leads to repeatable repair results.

### BRIEF DESCRIPTION

The following presents a simplified summary of the disclosed subject matter in order to provide a basic understanding of some aspects of the various embodiments described herein. This summary is not an extensive overview of the various embodiments. It is not intended to exclusively identify key features or essential features of the claimed subject matter set forth in the Claims, nor is it intended as an aid in determining the scope of the claimed subject matter. Its sole purpose is to present some concepts of the disclosure in a streamlined form as a prelude to the more detailed description that is presented later.

The various embodiments of the present invention are directed to providing solutions that address the issues of the aforementioned brazing approaches used for repairing nickel-based components that rely on slurry paste and diffusion to effectuate a brazing repair. The embodiments of the present invention overcome the issues of the previous brazing approaches by utilizing a high melt braze alloy material and a low melt braze alloy material and thermal spraying the braze alloy materials onto a surface of a portion of a nickel-based component to be repaired. The thermal spraying of the braze alloy materials forms a solidified deposit of the materials within the portion of the nickel-based component being repaired. The solidified deposit comprises a homogeneous braze coating containing the high melt braze alloy and the low melt braze alloy. In addition, the solidified deposit of the homogeneous braze coating is very dense or tightly packed due to the kinetic and thermal energy associated with thermal spraying application of the high melt braze alloy and the low melt braze alloy. The combination of the homogeneity and density of the high melt braze alloy and the low melt braze alloy obtained from the thermal spraying of the braze alloys provides the solidified deposit with a structural advantage in comparison to the brazed alloys used in the aforementioned brazing approaches because the solidified deposit obviates voids or porosity in the deposit. In this manner, when the nickel-based component and the solidified deposit are heated in the furnace, a high density brazed joint is formed with low discontinuities and has an even joint strength across the joint because of the lack of voids.

In accordance with one embodiment, a method is provided. The method comprises obtaining a high melt braze alloy material and a low melt braze alloy material; and thermal spraying the high melt braze alloy material and the low melt braze alloy material onto a surface of a nickel-based component containing a damaged portion to form solidified deposit within the damaged portion, wherein the solidified deposit comprises a homogeneous braze coating containing the high melt braze alloy and the low melt braze alloy, wherein an elemental weight percent of the high melt braze alloy material in the homogeneous braze coating is equal to or greater than 50% and the low melt braze alloy material in the homogeneous braze coating is less than or equal to 50 weight percent.

In accordance with another embodiment, a method of repairing a damaged portion of a nickel-based is provided. The method comprises: obtaining a high melt braze alloy material and a low melt braze alloy material; thermal spraying the high melt braze alloy material and the low melt braze alloy material onto a surface of the nickel-based component containing the damaged portion to form solidified deposit within the damaged portion, wherein the solidified deposit comprises a homogeneous braze coating containing the high melt braze alloy and the low melt braze alloy wherein the homogeneous braze coating containing the high melt braze alloy and the low melt braze alloy has a porosity that is less than about 2%; and heating the nickel-based component and the homogeneous braze coating to cause a metallurgical bonding between the nickel-based component and the homogeneous braze coating without melting the nickel-based component, the metallurgical bonding yielding a brazed joint in the damaged portion of the nickel-based component..

In accordance with a third embodiment, a system for repairing a damaged portion of a nickel-based component is provided. The system comprises: a feedstock of a high melt braze alloy material and a low melt braze alloy material; a thermal spraying apparatus configured to receive the feedstock and spray the high melt braze alloy material and the low melt braze alloy material onto a surface of the nickel-based component containing the damaged portion to form a solidified deposit within the damaged portion, wherein the thermal spraying apparatus includes: a gas heater configured to heat the high melt braze alloy material and the low melt braze alloy material with a pressurized gas; and a nozzle configured to receive the heated high melt braze alloy material and the low melt braze alloy material and direct the heated braze alloy materials to the surface of the nickel-based component containing the damaged portion at supersonic velocities that impart a high amount of kinetic energy to the heated braze alloy materials to form the solidified deposit within the damaged portion, wherein the solidified deposit comprises a homogeneous braze coating containing the high melt braze alloy and the low melt braze alloy, wherein an elemental weight percent of the high melt braze alloy material in the homogeneous braze coating is equal to or greater than 50% and the low melt braze alloy material in the homogeneous braze coating is less than or equal to 50 weight percent; and a furnace configured to heat the nickel-based component and the homogeneous braze coating, wherein the heat produced in the furnace causes a metallurgical bonding between the nickel-based component and the homogeneous braze coating without melting the nickel-based component, the metallurgical bonding yielding a brazed joint in the damaged portion of the nickel-based component.

### DRAWINGS

The present invention will be better understood from reading the following description of non-limiting embodiments, with reference to the attached drawings, wherein below:
FIGS. 1A and 1B show examples of portions of a turbine component that can be repaired by thermal spraying braze alloy materials to facilitate a high density brazed joint with low discontinuities according to an embodiment of the invention;
FIG. 2 is flow chart describing the operations of a method for repairing a nickel-based component such as a turbine component by thermal spraying braze alloy materials containing a high melt braze alloy and a low melt braze alloy according to an embodiment of the invention;
FIG. 3 shows an example of a cored wired that be configured with a high melt braze alloy and a low melt braze alloy and supplied as feedstock for thermal spraying the nickel-based component according to an embodiment of the invention;
FIG. 4 is a schematic of a system for thermal spraying a nickel-based component with a high melt braze alloy and a low melt braze alloy according to an embodiment of the invention;
FIG. 5 is a schematic of a thermal spraying apparatus such as a cold spray device that can thermal spray a nickel-based component with a high melt braze alloy and a low melt braze alloy according to an embodiment of the invention; and
FIG. 6 shows a schematic representation of a solidified deposit of a high melt braze alloy and a low melt braze alloy on a nickel-based substrate after thermal spraying according to an embodiment of the invention.

### DETAILED DESCRIPTION

Example embodiments of the present invention will be described more fully hereinafter with reference to the accompanying drawings, in which some, but not all embodiments are shown. Indeed, the present invention may be embodied in many different forms and should not be construed as limited to the embodiments set forth herein; rather, these embodiments are provided so that this disclosure will satisfy applicable legal requirements. For like numbers may refer to like elements throughout.

This disclosure relates generally to brazing nickel-based alloys and more specifically, to a method and a system for thermal spraying braze alloy materials onto a nickel-based component to facilitate a high density brazed joint with low discontinuities. The various embodiments of the present invention are described with respect to turbine parts formed from nickel-based materials such as nickel-based alloys. In particular, the embodiments are described with gas turbine nozzles (vanes) that can be used in a gas turbine engine having a compressor section, a combustor section, and a turbine section. However, it is understood that the method and the system for thermal spraying braze alloy materials onto a nickel-based component according to these embodiments has applicability beyond gas turbine nozzles, and thus, the embodiments are not meant to be limited to use with nozzles. For example, the various embodiments can be directed to thermal spraying braze alloy materials onto other components of a gas turbine that are formed of a nickel-based material that may wear or corrode over time and need repair of damaged portions. Airfoils, blades (buckets), shrouds, combustors, rotating turbine components, wheels, seals, and other hot gas components are non-limiting examples of gas turbine components that can be formed of nickel-based material such as nickel-based superalloys, and thus, have applicability with the method and system for thermal spraying braze alloy materials described herein.

Further, it is understood that the nickel-based gas turbine components can operate in all types of gas turbine systems and gas turbine combustion systems utilizing turbomachinery regardless of their application (e.g., land-based, marine-based, and aviation based applications). Gas turbine systems and gas turbine combustion systems using turbomachines that include, but are not limited to, heavy frame industrial gas turbines, aeroderivative gas turbines, marine gas turbines, ammonia-fueled gas turbines, hydrogen-fueled gas turbines, aviation gas turbines, and general combustion turbines are non-limiting examples of systems that have components or parts that are made of nickel-based material that may wear or corrode over time and need repair through brazing as these components are difficult to weld.

Moreover, the method and the system for thermal spraying braze alloy materials onto a nickel-based material has utility beyond gas turbine systems and gas turbine combustion systems, and in particular, can be used in any brazing application of a component or part of nickel-based material that is typically difficult to weld, and thus, necessitates the use of brazing for performing repairs of damaged sections.

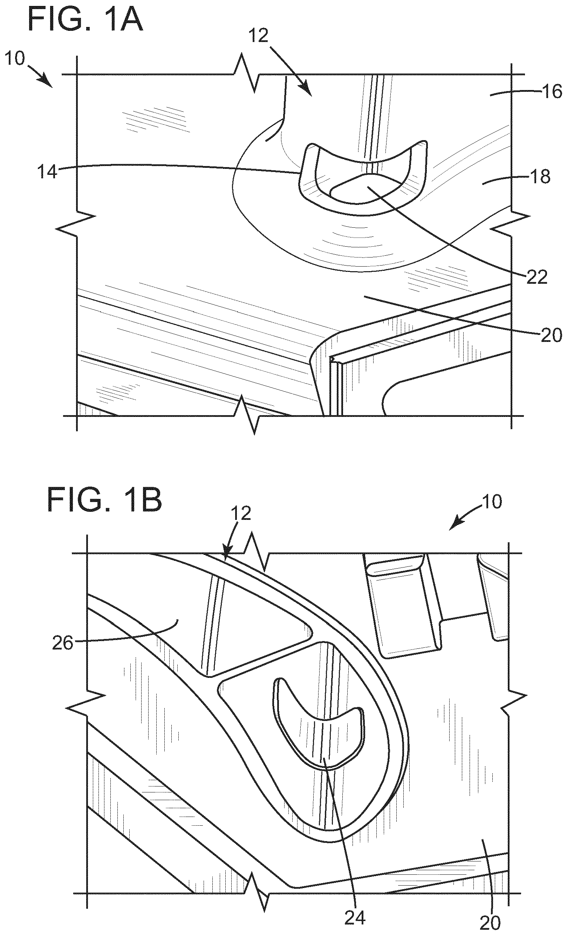

Turning now to the figures, FIGS. 1A and 1B show examples of portions of a turbine component 10 that can be repaired by thermal spraying braze alloy materials to facilitate a high density brazed joint with low discontinuities according to an embodiment of the invention. In particular, FIGS. 1A and 1B show different views of a nozzle 12 that can be used in a gas turbine engine. The nozzle 12 can be formed from a difficult-to-weld (DTW) alloy. As used herein, a "DTW" alloy is an alloy which exhibits liquation, and weld and strain-age cracking, of which makes it difficult and impractical to weld. In one embodiment, the nozzle 12 can be formed of a DTW alloy that includes a nickel-based superalloy. Examples of nickel-based superalloys can include, but are not limited to, GTD 111, GTD 444, GTD262, Rene N2, Rene N4, Rene N5, Rene N6, Rene 65, Rene 77 (Udimet 700), Rene 80, Rene 88DT, Rene 104, Rene 108, Rene 125, Rene 142, Rene 195, Rene N500, Rene N515, CM247, MarM247, CMSX-4, CMSX10, MGA1400, MGA2400, IN100, INCONEL 700, INCONEL 738, INCONEL 792, PWA1480, PWA1483, PWA 1484, Mar-M-200, UDIMET 500, ASTROLOY, and combinations thereof.

Due to the environment in which the turbine component 10 can operate, the nozzle 12 may wear or corrode and become damaged. FIG. 1A shows the nozzle 12 having a damaged portion 14 at a lower region 16 of the turbine component 10, i.e., above a fillet section 18 of the nozzle 12 that transitions to a platform 20. As shown in FIG. 1A, the damaged portion 14 is hollowed out from the base material that forms the nozzle 12 to define a gap 22 in the material. In general, the material containing the damaged portion can include a defect, which may be in the form of a crack, indentation, corrosion, or other surface irregularity where material is removed from the base material of the nozzle 12 or otherwise damaged. The damaged portion 14 can be removed from the lower region 16 of the turbine component using any of a number of well-known material removal techniques used in the repair of turbine components. These material removal techniques can include, but are not limited to, mechanically abrading (e.g., grit blasting, mechanical grinding, cutting), electrical discharge machining, chemically etching, and combinations thereof.

After removing the damaged portion 14, the remaining portion about the nozzle 12 in the vicinity of the gap 22 can be cleaned and prepared for brazing. The cleaning and preparing of the remaining portion about the nozzle 12 that is to be repaired by brazing can include cleaning and/or degreasing the surface of the remaining portion. For example, the cleaning and/or degreasing can include, but is not limited to, thermally cleaning the affected area under a vacuum, acetone wipe, grit blasting, fluoride ion cleaning (FIC), hydrogen cleaning, and combinations thereof.

In one embodiment, as shown in FIG. 1B, a coupon or backing plate 24 can be applied to an inner portion 26 of the nozzle 12 in order to facilitate the brazing. In particular, the backing plate 24 serves as a platform or a preform backer for the braze alloy material to land while filling the gap 22 in the damaged portion 14. Although FIG. 1B shows the backing plate 24 from the inside of the nozzle, the other side can have a middle portion that is a ridge that protrudes out to the surface of the nozzle 12. In this manner the braze alloy material can be applied to the ridge and the outer portion surrounding the middle portion in order to make a brazing about all of the damaged portion in which the backing plate 24 is located.

It is understood that the shape of the backing plate 24 depicted in FIG. 1B is illustrative of one possible shape that can be utilized. Those skilled in the art will appreciate that the shape of the backing plate 24 can depend on a number of considerations which can include, but are not limited to, the thickness of the portion of the turbine part that is damaged, the extent of the defect in the damaged portion, and the location of the damaged portion.

After brazing of the nozzle 12 is finished, the backing plate 24 can be removed using any of a number of well-known machining techniques. Alternatively, the backing plate 24 can remain and be used for providing some additional stability to the braze alloy used to fill in the gap 22. Also, it should be understood that the backing plate 24 is an optional element and not necessary for the brazing process described herein to repair the turbine component 10.

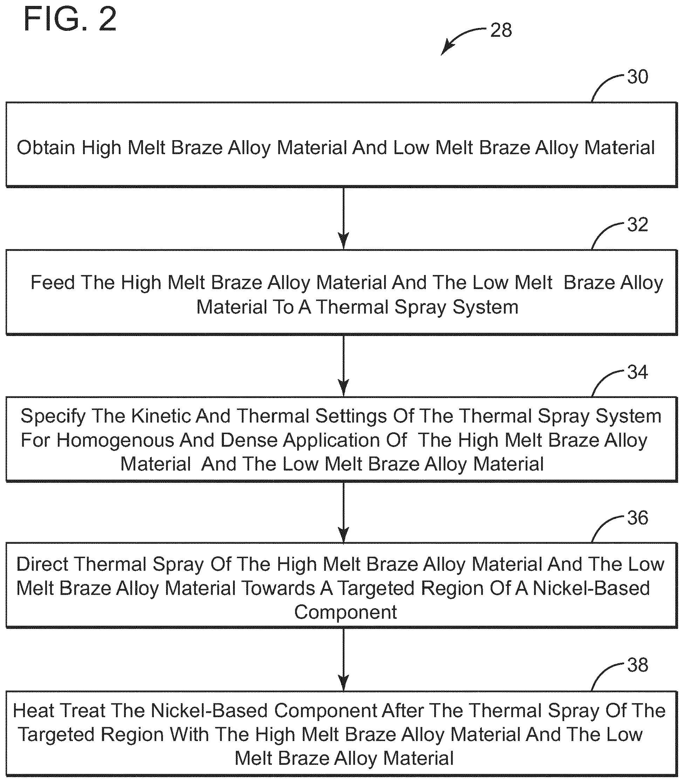

FIG. 2 is flow chart 28 describing the operations of a method for repairing a nickel-based turbine component, such as for example a nozzle like the one depicted in FIGS. 1A and 1B, by thermal spraying braze alloy materials containing a mixture of a high melt braze alloy and a low melt braze alloy according to an embodiment of the invention. Although not depicted in FIG. 2, before the turbine component undergoes the thermal spray repair operation, the component can be prepped for the repair by cleaning and/or degreasing the portion that has been identified as damaged with some form of defect (e.g., a crack, an indentation, corrosion, or other surface irregularity). In an embodiment, the damaged portion containing the defect can be hollowed out such that a gap remains in the region of the turbine component where the damaged portion is removed. The surface of the turbine component located about the gap can be cleaned and/or degreased in preparation for the thermal spray brazing repair operation of FIG. 2.

The thermal spray brazing repair operation of FIG. 2 can begin at 30 where a high melt braze alloy material and a low melt braze alloy material are obtained. As used herein, a high melt braze alloy material means a braze material with comparable properties to the base material and similar melt point, while a low melt braze alloy material means a braze material containing melting point suppressants to cause melting below the base material melt point.

The high melt braze alloy material and the low melt braze alloy material can comprise any of a number of suitable alloy materials. For example, the high melt braze alloy material can include, but is not limited to, RENE 108, INCONEL 262, MARM 247, RENE 142, RENE 80, INCONEL 718, INCONEL 738, Hastelloy X, and RENE N5, and the low melt braze alloy material can include, but is not limited to, D15, DF4B, B1P, AMS 4782, AMS 4777, BNi-9, BNi-6, and BNi-7. In one embodiment, the high melt braze alloy material is selected from the group consisting of RENE 108, INCONEL 262, MARM 247, and RENE 142 and the low melt braze alloy material is selected from the group consisting of D15, DF4B, and B1P. In a preferred embodiment, the high melt braze alloy material can include RENE 108 and the low melt braze alloy material can include DF4B.

The thermal spray brazing repair operation of FIG. 2 continues at 32 where the high melt braze alloy material and the low melt braze alloy material is fed to a thermal spray system. In one embodiment, the high melt braze alloy and the low melt braze can take the form of powder material. In another embodiment, the high melt braze alloy and the low melt braze can take the form of a wire electrode. For example, the wire electrode can include a first wire electrode of high melt braze alloy material and a second wire electrode of low melt braze alloy material. In one scenario, the first wire electrode of high melt braze alloy material and the second wire electrode of low melt braze alloy material can be fed at the same time to the thermal spray system to obtain a homogenize mix in the spray by manipulating the feed rate of the wire electrodes.

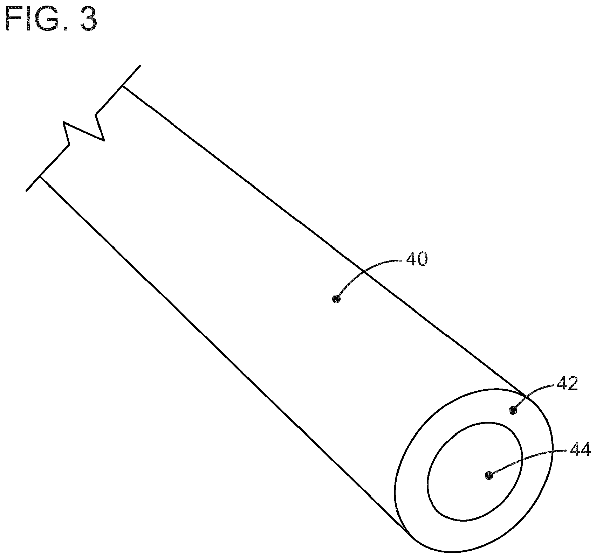

In one embodiment, as shown in FIG. 3, the wire electrode can include a single core wire electrode 40 having an inner portion 42 containing one of the high melt braze alloy material and the low melt braze alloy material, and an outer portion 44 enclosing the inner portion containing the other of the high melt braze alloy material and the low melt braze alloy material. The single core wire electrode can be beneficial in a scenario where the brazing repair process has already been "dialedin" such that the optimal amounts of the high melt braze alloy material and the low melt braze alloy material that will result in a homogenous and dense application without voids are known. With this knowledge, the diameters of both the inner portion 42 and the outer portion 44 of the single core wire electrode 40 can be set to obtain the homogenous mixture of the braze alloys in the thermal spray.

In one embodiment, the high melt braze alloy and the low melt braze alloy can comprise sheet of braze alloy material. For example, the sheet can comprise a first sheet of high melt braze alloy material and a second sheet of low melt braze alloy material. It is understood that the high melt braze alloy and the low melt braze alloy that can be used by the thermal spray system can also include a slurry material, a wire electrode, a powder and a rod.

The high melt braze alloy and the low melt braze alloy, whether in powder form, a wire electrode, a sheet, a slurry material or a rod, can be heated and introduced at a high pressure into a gas stream, an emitted toward the turbine component at a high velocity that may reach a supersonic velocity. The thermal energy from the melting of the braze alloys and the kinetic energy of the alloys causes the particles to deform and flatten on impact with the turbine component. The flattening promotes a metallurgical, mechanical, or combination of metallurgical and mechanical bond with the turbine component and results in a protective coating on the component.

Referring back to the thermal spray brazing repair operation of FIG. 2, the kinetic and thermal settings of the thermal spray system are specified at 34 in a manner that will result in a homogenous and dense application of the high melt braze alloy and the low melt braze alloy on the surface of the turbine component that is to undergo the thermal spray brazing repair operation. In particular, the thermal spray application, followed by thermal cycling into the joint, which is specific to the chosen alloys, and also the thermal spray parameters, which are specific to the equipment or process being used (e.g. the feeder mechanism and parameters), can all have a role in obtaining a dense and homogenous layer of the high melt braze alloy and the low melt braze alloy on the surface of the turbine component.

With the kinetic and thermal settings specified, the thermal spray system can direct the thermal spray of the high melt braze alloy and the low melt braze alloy towards a target region (e.g., the region to be repaired) of the nickel-based turbine component at 36. To this extent, the thermal spray system can spray the target region of the component with a solidified deposit of the high melt braze alloy and the low melt braze alloy. The solidified deposit comprises a homogeneous braze coating containing the high melt braze alloy and the low melt braze alloy without voids or porosity.

In one embodiment, the homogeneous braze coating containing the high melt braze alloy and the low melt braze alloy can have a porosity that is less than about 2%.

In one embodiment, an elemental weight percent of the high melt braze alloy material in the homogeneous braze coating can be equal to or greater than 50% and the low melt braze alloy material in the homogeneous braze coating can be less than or equal to 50 weight percent.

In one embodiment, an amount of the high melt braze alloy in the homogeneous braze coating is between about 50 vol% and 95 vol% of the homogeneous braze coating, and an amount of the low melt braze alloy in the homogeneous braze coating is between about 5 vol% and 50 vol% of the homogeneous braze coating.

After the thermal spraying of the nickel-based turbine component with the high melt braze alloy and the low melt braze alloy, the repair operation of FIG. 2 can continue by heat treating the component at 38. In one embodiment, the heat treating can include placing the nickel-based component with the thermally sprayed deposit of the high melt braze alloy and the low melt braze alloy in a furnace. For example, the heating of the brazed nickel-based component in the furnace can occur at a temperature that can range from about 1900° F (1038° C) to about 2300° F (1260° C) for a time period that can range from about 10 minutes to about 1 hour. The heat produced in the furnace causes a metallurgical bonding between the nickel-based component and the homogeneous braze coating without melting the nickel-based component. In this manner, the metallurgical bonding yields a brazed joint in the damaged portion of the nickel-based component. In one embodiment, the brazed joint can have a hardness on the Rockwell scale that ranges from about 40 HR to about 60 HR.

While for purposes of simplicity of explanation, the operations shown in FIG. 2 are described as a series of acts. It is to be understood and appreciated that the subject innovation associated with FIG. 2 is not limited by the order of acts, as some acts may, in accordance therewith, occur in a different order and/or concurrently with other acts from that shown and described herein. While for purposes of simplicity of explanation, the operations shown in FIG. 2 are described as a series of acts. It is to be understood and appreciated that the subject innovation associated with FIG. 2 is not limited by the order of acts, as some acts may, in accordance therewith, occur in a different order and/or concurrently with other acts from that shown and described herein. Furthermore, two or more of the disclosed example methods can be implemented in combination with each other, to accomplish one or more features or advantages described herein.

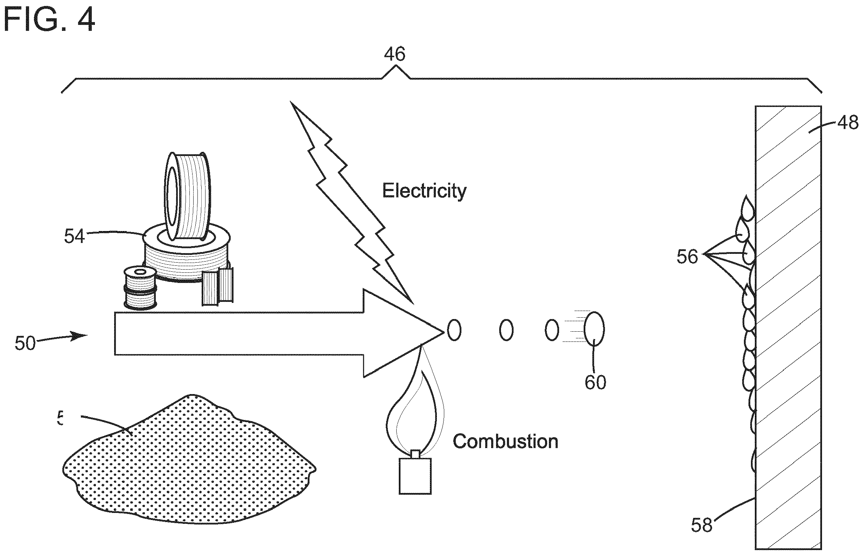

FIG. 4 is a schematic of a system 46 for thermal spraying a nickel-based component 48 such as turbine component with the mixture of the high melt braze alloy and the low melt braze alloy according to an embodiment of the invention. As shown in FIG. 4, the system 46 can include a feedstock 50 of a high melt braze alloy material and a low melt braze alloy material. In one embodiment, the feedstock 50 can include having the high melt braze alloy material and the low melt braze alloy material in the form of a powder 52. Although the schematic of FIG. 4 shows the powder 52 with a general representation, it is understood that the feedstock 50 can have a separate batch of powder that includes the high melt braze alloy material and another batch of powder that includes the low melt braze alloy. Alternatively, in one embodiment, the feedstock 50 can include a braze alloy mixture containing the high melt braze alloy material and the low melt braze alloy material. The feedstock 50 can also include a wire electrode 54 of the high melt braze alloy material and the low melt braze alloy material. For example, the wire electrode 54 can include a wire electrode of the high melt braze alloy material and another wire electrode of the low melt braze alloy. The feedstock 50 can also include having the high melt braze alloy material and the low melt braze alloy in other forms as mentioned above that are suitable for use with a thermal spray system, including but not limited to, sheets of the high melt braze alloy material and the second sheet of low melt braze alloy material.

Although not depicted in the system 46 of FIG. 4, the system can include a thermal spraying apparatus configured to receive the feedstock 50, melt the high melt braze alloy material and the low melt braze alloy material, and spray the braze alloy materials onto a surface of the nickel-based component 48 containing the damaged portion. In general, the thermal spraying apparatus can use heat, electricity and combustion of a hot gas to direct a solidified deposit 56 of the high melt braze alloy material and the low melt braze alloy material onto a surface 58 of the nickel-based component 48. For example, the feedstock 50 of the high melt braze alloy material and the low melt braze alloy material can be heated by the thermal spraying apparatus while it also can use electricity and combustion of a hot gas to impart a high amount of kinetic energy to the heated braze alloy materials 60 in order to direct the high melt braze alloy material and the low melt braze alloy material onto the surface 58 of the nickel-based component 48 at supersonic velocities.

As noted above, the solidified deposit 56 can comprise a homogeneous braze coating containing the high melt braze alloy and the low melt braze alloy. In addition, to having a homogeneous coating, the coating of the solidified deposit 56 is characterized with a density of the high melt braze alloy and the low melt braze alloy that is without voids and porosity. In general, the system 46 can change one or more of the heating of the high melt braze alloy and the low melt braze alloy, the electricity of the system and combustion of the hot gas to alter characteristics of the braze alloy materials microstructure and/or morphology, as well as the supply of the materials to the surface 58 of the nickel-based component 48. To this extent, this alteration can yield a solidified deposit 56 with the aforementioned properties (e.g., homogeneous coating of the high melt braze alloy and the low melt braze alloy, density without voids and porosity, etc.).

The system 46 of FIG. 4 can be implemented by any of a number of different thermal spray systems. Examples of possible thermal spray system that can be utilized to implement the process described herein includes, but is not limited to, combustion (high velocity oxy-fuel (HVOF)), plasma arc, electric wire arc, and cold spray processes. The choice of the thermal spray system used can depend on any of a number of different considerations. These considerations can include, but are not limited to, the material chemistry of the high melt braze alloy and the low melt braze alloy, the geometry of the component that is to undergo the thermal spray process, the extent of the portion the component that needs brazing.

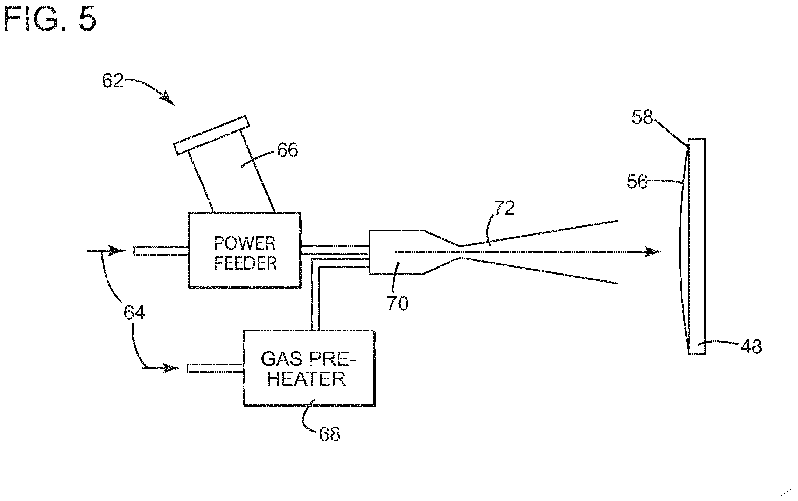

In one embodiment, the thermal spray system can include a cold spray system that is configured to cold spray the high melt braze alloy and the low melt braze alloy onto a surface of a nickel-based component that is the subject of a brazing repair operation. FIG. 5 is a schematic of a cold spray device 62 that can thermal spray a nickel-based component such as a turbine component with the high melt braze alloy and the low melt braze alloy according to an embodiment of the invention. In the cold spray device 62 of FIG. 5, a pressurized gas 64 is introduced to a powder feeder 66 and a gas pre-heater 68.

The pressurized gas entering the gas pre-heater 68 is heated to a temperature that can range from 572° F (300° C) to 1472° F (800° C). The heated pressurized gas is then introduced to a powder pre-heat chamber 70 that can be at a predetermine pressure (e.g., +200 PSI). In particular, the pressurized gas 64 entering the powder feeder 66 picks up powder of the high melt braze alloy and the low melt braze alloy (e.g., a mixture of hard phase and soft phase powders (both bends and alloys)) and transports it to the powder pre-heat chamber 70, where it is heated by the heated pressurized gas 64. Typical metal powders (pure metals like aluminum, copper, nickel, iron, cobalt, tantalum, niobium, or alloys of the same) can have a diameter that is approximately 50 microns. The heated powder is then transported through a converging-diverging nozzle 72 and directed as a spray at the surface 58 of the nickel-based component 48 towards a base material containing a damaged portion that has been removed. In this manner, the damaged portion is filled in with thin layers of the high melt braze alloy material and the low melt braze alloy material that build upon each other to produce a solidified deposit 56 of the braze alloy materials in the form of a coating with a coating thickness.

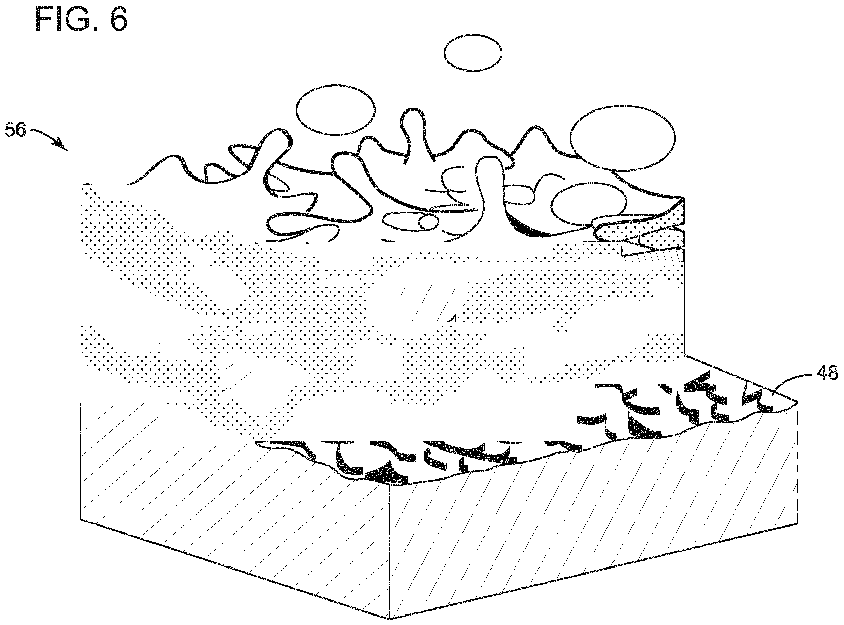

The use of the nozzle 72 and the hot pressurized gases 64 to accelerate the high melt braze alloy and the low melt braze alloy powder particles to supersonic velocities imparts a high amount of kinetic energy to the particles. As a result of high kinetic energy and low thermal energy, the particles of the high melt braze alloy material and the low melt braze alloy material soften the low melting phase and deforms on impact with the surface 58 creating a splat or solidified deposit of the materials. This soft phase material entraps the hard phase particles as designed into a mixture of thin layer. FIG. 6 shows a schematic representation of a solidified deposit 56 of the high melt braze alloy and the low melt braze alloy on a nickel-based substrate such as the nickel-based component 48 after thermal spraying.

With the cold spray device 62, one or more of the heating of the high melt braze alloy and the low melt braze alloy, the electricity of the system and combustion of the hot gas can be regulated to alter characteristics of the braze alloy materials microstructure and/or morphology as well as the supply of the materials to the surface 58 of the nickel-based component 48 in order produce the solidified deposit 56 with the aforementioned properties (e.g., homogeneous coating of the high melt braze alloy and the low melt braze alloy, density without voids and porosity. It is understood that the cold spray device 62 of FIG. 5 can include a number of other components not depicted that can effectuate the cold spray process. For example, the cold spray device 62 can include a gas delivery network and a powder delivery network to supply the hot gases 64 and the high melt braze alloy and the low melt braze alloy, respectively, and a tool (e.g., brace, clamp, etc.) to hold the nickel-based component 48 in position. Cold Spray like any thermal spray process has X amount of thermal energy and X amount of kinetic energy based on parameters used to create a coating. Those parameters also include powder feed rates, which promote coating properties, such as density, porosity, and hardness. The thermal spray processing of this embodiment can be referred to as a two-step process; the first step being sprayed (Cold spray, HVOF, Plasma, Wire Arc) to produce the coating and the second step being vacuum furnace heat treatment. Both steps contribute to chemical reactions on a micro and macro scale, melting low temperature braze powder and softening high temperature alloy. Material chemistries, particle size, parameters and heat treat parameter all can be adjusted to engineer the properties required for a successful repair application.

It is understood that the cold spray device 62 of FIG. 5 can include a number of other components not depicted that can effectuate the cold spray process. For example, the cold spray device 62 can include a gas delivery network and a powder delivery network to supply the hot gases 64 and the high melt braze alloy and the low melt braze alloy, respectively, and a tool (e.g., brace, clamp, etc.) to hold the nickel-based component 48 in position.

Furthermore, it is understood that the cold spray device 62 of FIG. 5 represents one example of a cold spray apparatus that can be used to braze repair a nickel-based component with a solidified deposit of the high melt braze alloy and the low melt braze alloy such that there is a homogenous coating of the alloy materials without voids and porosity. Those skilled in the art will appreciate that other cold spray systems can be utilized and configured to deliver the solidified deposit and attain a brazed joint with the use of a furnace that is high density with low discontinuities, and has even strength across the joint.

From the description of the illustrated embodiments presented herein, it should be evident that the subject disclosure sets forth an effective solution for thermal spraying braze alloy materials onto a nickel-based component to facilitate a high density brazed joint with low discontinuities. This solution provided by the various embodiments entails thermal spraying the nickel-based component with a high melt braze alloy and a low melt braze alloy. Thermal spraying of the high melt braze alloy and a low melt braze alloy results in a solidified deposit on the surface of the nickel-based component having a homogenous coating of the braze alloys such that the density of the coating is without voids and porosity. To this extent, a high density brazed joint with low discontinuities, and even joint strength across the joint can be attained. This benefit is in contrast to brazing approaches that rely on a binder in the mixture of the braze alloys and diffusion of the alloys to obtain a transient liquid phase bonding of the braze alloy materials and the base material. With the various embodiments, the voids and porosity are eliminated, and also a real bond is obtained between the braze alloys and the base material at a metallurgical level.

Not only does the method and system for thermal spraying braze alloy materials onto a nickel-based component as disclosed herein obviate defects that can arise in the braze repair through the use of current approaches due to eliminating the need for a binder in the mixture of the braze alloys and reliance on the diffusion of the alloys, but the various embodiments also can provide further benefits. For example, the method and system can result in a reduction in the in-process rework that is typically associated with the braze repair of a nickel-based component such as a turbine component. In addition, with the use of the method and system, there will be a reduction in processing time of the braze repair which translates to a cost savings due to the reduced time. Other benefits can include obviating defects that can arise in the braze repair through the use of current approaches due to eliminating the need for a binder in the mixture of the braze alloys and reliance on the diffusion of the alloys. In addition, the thermal spraying braze alloy repair of the various embodiments can also decrease the risk of side wall movement of the turbine component that can arise with the braze repair approaches currently used.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize. For example, parts, components, steps and aspects from different embodiments may be combined or suitable for use in other embodiments even though not described in the disclosure or depicted in the figures. Therefore, since certain changes may be made in the above-described invention, without departing from the spirit and scope of the invention herein involved, it is intended that all of the subject matter of the above description shown in the accompanying drawings shall be interpreted merely as examples illustrating the inventive concept herein and shall not be construed as limiting the invention.

In this regard, while the disclosed subject matter has been described in connection with various embodiments and corresponding figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below. For example, references to "one embodiment" of the present invention are not intended to be interpreted as excluding the existence of additional embodiments that also incorporate the recited features.

In the appended claims, the terms "including" and "in which" are used as the plain-English equivalents of the respective terms "comprising" and "wherein." Moreover, in the following claims, terms such as "first," "second," "third," "upper," "lower," "bottom," "top," etc. are used merely as labels, and are not intended to impose numerical or positional requirements on their objects. The terms "substantially," "generally," and "about" indicate conditions within reasonably achievable manufacturing and assembly tolerances, relative to ideal desired conditions suitable for achieving the functional purpose of a component or assembly. Further, the limitations of the following claims are not written in means-plus-function format and are not intended to be interpreted as such, unless and until such claim limitations expressly use the phrase "means for" followed by a statement of function void of further structure.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

What has been described above includes examples of systems and methods illustrative of the disclosed subject matter. It is, of course, not possible to describe every combination of components or methodologies here. One of ordinary skill in the art may recognize that many further combinations and permutations of the claimed subject matter are possible. Furthermore, to the extent that the terms "includes," "has," "possesses," and the like are used in the detailed description, claims, appendices and drawings, such terms are intended to be inclusive in a manner similar to the term "comprising" as "comprising" is interpreted when employed as a transitional word in a claim. That is, unless explicitly stated to the contrary, embodiments "comprising," "including," or "having" an element or a plurality of elements having a particular property may include additional such elements not having that property.

This written description uses examples to disclose several embodiments of the invention, including the best mode, and also to enable one of ordinary skill in the art to practice the embodiments of invention, including making and using any devices or systems and performing any incorporated methods. The patentable scope of the invention is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:
A method, comprising: obtaining a high melt braze alloy material and a low melt braze alloy material; and thermal spraying the high melt braze alloy material and the low melt braze alloy material onto a surface of a nickel-based component containing a damaged portion to form solidified deposit within the damaged portion, wherein the solidified deposit comprises a homogeneous braze coating containing the high melt braze alloy and the low melt braze alloy, wherein an elemental weight percent of the high melt braze alloy material in the homogeneous braze coating is equal to or greater than 50% and the low melt braze alloy material in the homogeneous braze coating is less than or equal to 50 weight percent.

The method of the preceding clause, wherein the homogeneous braze coating containing the high melt braze alloy and the low melt braze alloy has a porosity that is less than about 2%.

The method of any of the preceding clauses, wherein an amount of the high melt braze alloy in the homogeneous braze coating is between about 50 vol% and 95 vol% of the homogeneous braze coating and an amount of the low melt braze alloy in the homogeneous braze coating is between about 5 vol% and 50 vol% of the homogeneous braze coating.

A method of repairing a damaged portion of a nickel-based component, comprising: obtaining a high melt braze alloy material and a low melt braze alloy material; thermal spraying the high melt braze alloy material and the low melt braze alloy material onto a surface of the nickel-based component containing the damaged portion to form solidified deposit within the damaged portion, wherein the solidified deposit comprises a homogeneous braze coating containing the high melt braze alloy and the low melt braze alloy wherein the homogeneous braze coating containing the high melt braze alloy and the low melt braze alloy has a porosity that is less than about 2%; and heating the nickel-based component and the homogeneous braze coating to cause a metallurgical bonding between the nickel-based component and the homogeneous braze coating without melting the nickel-based component, the metallurgical bonding yielding a brazed joint in the damaged portion of the nickel-based component.

The method of the preceding clause, wherein the high melt braze alloy material is selected from the group consisting of RENE 108, INCONEL 262, MARM 247, and RENE 142.

The method of any of the preceding clauses, wherein the low melt braze alloy material is selected from the group consisting of D15, DF4B, and B1P.

The method of any of the preceding clauses, wherein the high melt braze alloy material comprises RENE 108 and the low melt braze alloy material comprises DF4B.

The method of any of the preceding clauses, wherein the brazed joint has a hardness that ranges from about 40 HR to about 60 HR.

The method of any of the preceding clauses, wherein the thermal spraying of the high melt braze alloy and the low melt braze alloy onto the surface of the damaged portion of the nickel-based component comprises cold spraying the braze alloys onto the surface.

The method of any of the preceding clauses, wherein an amount of the high melt braze alloy in the homogeneous braze coating is between about 50 vol% and 95 vol% of the homogeneous braze coating and an amount of the low melt braze alloy in the homogeneous braze coating is between about 5 vol% and 50 vol% of the homogeneous braze coating.

The method of any of the preceding clauses, wherein an elemental weight percent of the high melt braze alloy material in the homogeneous braze coating is equal to or greater than 50% and the low melt braze alloy material in the homogeneous braze coating is less than or equal to 50 weight percent.

A system for repairing a damaged portion of a nickel-based component, comprising: a feedstock of a high melt braze alloy material and a low melt braze alloy material; a thermal spraying apparatus configured to receive the feedstock and spray the high melt braze alloy material and the low melt braze alloy material onto a surface of the nickel-based component containing the damaged portion to form a solidified deposit within the damaged portion, wherein the thermal spraying apparatus includes: a gas heater configured to heat the high melt braze alloy material and the low melt braze alloy material with a pressurized gas; and a nozzle configured to receive the heated high melt braze alloy material and the low melt braze alloy material and direct the heated braze alloy materials to the surface of the nickel-based component containing the damaged portion at supersonic velocities that impart a high amount of kinetic energy to the heated braze alloy materials to form the solidified deposit within the damaged portion, wherein the solidified deposit comprises a homogeneous braze coating containing the high melt braze alloy and the low melt braze alloy, wherein an elemental weight percent of the high melt braze alloy material in the homogeneous braze coating is equal to or greater than 50% and the low melt braze alloy material in the homogeneous braze coating is less than or equal to 50 weight percent; and a furnace configured to heat the nickel-based component and the homogeneous braze coating, wherein the heat produced in the furnace causes a metallurgical bonding between the nickel-based component and the homogeneous braze coating without melting the nickel-based component, the metallurgical bonding yielding a brazed joint in the damaged portion of the nickel-based component.

The system of the preceding clause, wherein the feedstock of the high melt braze alloy material and the low melt braze alloy material comprises a wire of braze alloy materials.

The system of any of the preceding clauses, wherein the wire comprises a first wire of high melt braze alloy material and a second wire of low melt braze alloy material.

The system of any of the preceding clauses, wherein the wire comprises a single core wire having an inner portion containing one of the high melt braze alloy material and the low melt braze alloy material, and an outer portion enclosing the inner portion containing the other of the high melt braze alloy material and the low melt braze alloy material that forms the inner portion of the single core wire.

The system of any of the preceding clauses, wherein the feedstock of the high melt braze alloy material and the low melt braze alloy material comprises a powder form of the high melt braze alloy material and a powder form of the low melt braze alloy material.

The system of any of the preceding clauses, wherein the thermal spraying apparatus comprises a cold spray device.

The system of any of the preceding clauses, wherein the high melt braze alloy material is selected from the group consisting of RENE 108, INCONEL 262, MARM 247, and RENE 142.

The system of any of the preceding clauses, wherein the low melt braze alloy material is selected from the group consisting of D15, DF4B, and B1P.

The system of any of the preceding clauses, wherein the high melt braze alloy material comprises RENE 108 and the low melt braze alloy material comprises DF4B.

## Claims

1. A method, comprising:
obtaining a high melt braze alloy material and a low melt braze alloy material; and
thermal spraying the high melt braze alloy material and the low melt braze alloy material onto a surface of a nickel-based component containing a damaged portion to form solidified deposit within the damaged portion, wherein the solidified deposit comprises a homogeneous braze coating containing the high melt braze alloy and the low melt braze alloy, wherein an elemental weight percent of the high melt braze alloy material in the homogeneous braze coating is equal to or greater than 50% and the low melt braze alloy material in the homogeneous braze coating is less than or equal to 50 weight percent.

2. The method of claim 1, wherein the homogeneous braze coating containing the high melt braze alloy and the low melt braze alloy has a porosity that is less than about 2%.

3. The method of claim 1, wherein an amount of the high melt braze alloy in the homogeneous braze coating is between about 50 vol% and 95 vol% of the homogeneous braze coating and an amount of the low melt braze alloy in the homogeneous braze coating is between about 5 vol% and 50 vol% of the homogeneous braze coating.

4. A method of repairing a damaged portion (14) of a nickel-based component (48), comprising:
obtaining a high melt braze alloy material and a low melt braze alloy material;
thermal spraying the high melt braze alloy material and the low melt braze alloy material onto a surface of the nickel-based component (48) containing the damaged portion to form solidified deposit within the damaged portion (14), wherein the solidified deposit (56) comprises a homogeneous braze coating containing the high melt braze alloy and the low melt braze alloy wherein the homogeneous braze coating containing the high melt braze alloy and the low melt braze alloy has a porosity that is less than about 2%; and
heating the nickel-based component (48) and the homogeneous braze coating to cause a metallurgical bonding between the nickel-based component (48) and the homogeneous braze coating without melting the nickel-based component (48), the metallurgical bonding yielding a brazed joint in the damaged portion (14) of the nickel-based component (48).

5. The method of claim 4, wherein the high melt braze alloy material is selected from the group consisting of RENE 108, INCONEL 262, MARM 247, and RENE 142.

6. The method of claim 4, wherein the low melt braze alloy material is selected from the group consisting of D15, DF4B, and B1P.

7. The method of claim 4, wherein the high melt braze alloy material comprises RENE 108 and the low melt braze alloy material comprises DF4B.

8. The method of claim 4, wherein the brazed joint has a hardness that ranges from about 40 HR to about 60 HR.

9. The method of claim 4, wherein the thermal spraying of the high melt braze alloy and the low melt braze alloy onto the surface of the damaged portion (14) of the nickel-based component (48) comprises cold spraying the braze alloys onto the surface.

10. The method of claim 4, wherein an amount of the high melt braze alloy in the homogeneous braze coating is between about 50 vol% and 95 vol% of the homogeneous braze coating and an amount of the low melt braze alloy in the homogeneous braze coating is between about 5 vol% and 50 vol% of the homogeneous braze coating.

11. The method of claim 4, wherein an elemental weight percent of the high melt braze alloy material in the homogeneous braze coating is equal to or greater than 50% and the low melt braze alloy material in the homogeneous braze coating is less than or equal to 50 weight percent.

12. A system (46) for repairing a damaged portion (14) of a nickel-based component (48), comprising:
a feedstock (50) of a high melt braze alloy material and a low melt braze alloy material;
a thermal spraying apparatus (62) configured to receive the feedstock (50) and spray the high melt braze alloy material and the low melt braze alloy material onto a surface (58) of the nickel-based component (48) containing the damaged portion (14) to form a solidified deposit (56) within the damaged portion (14), wherein the thermal spraying apparatus (62)includes:
a gas heater (68) configured to heat the high melt braze alloy material and the low melt braze alloy material with a pressurized gas (64); and
a nozzle (72) configured to receive the heated high melt braze alloy material and the low melt braze alloy material and direct the heated braze alloy materials (60) to the surface (58) of the nickel-based component (48) containing the damaged portion (14) at supersonic velocities that impart a high amount of kinetic energy to the heated braze alloy materials (60) to form the solidified deposit (56) within the damaged portion (14), wherein the solidified deposit (56) comprises a homogeneous braze coating containing the high melt braze alloy and the low melt braze alloy, wherein an elemental weight percent of the high melt braze alloy material in the homogeneous braze coating is equal to or greater than 50% and the low melt braze alloy material in the homogeneous braze coating is less than or equal to 50 weight percent; and
a furnace configured to heat the nickel-based component (48) and the homogeneous braze coating, wherein the heat produced in the furnace causes a metallurgical bonding between the nickel-based component (48) and the homogeneous braze coating without melting the nickel-based component (48), the metallurgical bonding yielding a brazed joint in the damaged portion (14) of the nickel-based component (48).

13. The system (46) of claim 12, wherein the feedstock (50) of the high melt braze alloy material and the low melt braze alloy material comprises a wire of braze alloy materials.

14. The system (46) of claim 12, wherein the feedstock (50) of the high melt braze alloy material and the low melt braze alloy material comprises a powder (52) form of the high melt braze alloy material and a powder (52) form of the low melt braze alloy material.

15. The system (46) of claim 12, wherein the thermal spraying apparatus (62) comprises a cold spray device (62).
